# EUROPEAN PATENT SPECIFICATION

(11) **EP 0 610 758 B1**
(45) Date of publication and mention of the grant of the patent: **04.11.1998**
(21) Application number: 94101300.5
(22) Date of filing: 28.01.1994
(51) Int. Cl.: G01B 11/00, G01B 11/08, G01B 11/10

(54) **Method and assembly for determining the size and position of a roll head**
Verfahren und Einrichtung zum Bestimmen der Grösse und der Lage eines Walzkopfes
Procédé et système pour la détermination des dimensions et de la position d'une tête de cylindre

(30) Priority: 09.02.1993 FI 930548
(43) Date of publication of application: 17.08.1994
(73) Proprietor: VALMET CORPORATION, 00620 Helsinki (FI)
(72) Inventor: Nieminen, Seppo, SF-04440 Järvenpää (FI); Ohtonen, Aimo, SF-15870 Hollola (FI)
(74) Representative: Zipse + Habersack

(56) References cited:
- EP-A- 0 004 265
- FR-A- 2 430 595
- US-A- 4 063 820
- US-A- 5 157 265

## Description

The present invention relates to a method according to the preamble of claim 1 for determining the size and position of head of paper rolls picked by means of a clamp.

The invention further concerns an assembly according to the preamble of claim 8 for implementing said method.

The present invention is particularly suited to the handling of outer heads, while it can also be applied to inner heads though the positional accuracy requirements associated with the latter are much more relaxed.

A wide paper roll delivered from a paper machine is first taken to a slitter and slit into rolls of appropriate width. Subsequently, the rolls are wrapped for transportation. During the wrapping of paper rolls, the inner heads are first placed on the ends of each roll, after which a sufficient length of the wrapper is wrapped about the roll and then the overlaps of the wrapper are crimped against the rims of the inner heads. Conventionally using a hot-melt glue, an outer head is next adhered to the ends of the roll covering the crimped overlap of the wrapper and the inner head. The inner head is usually relatively thick and thus capable of protecting the roll end against mechanical damage. The outer head can thus be thinner serving for the purpose of binding the wrapper at the roll ends and protecting the roll against humidity. Frequently, the coloring and printed pattern of the outer head are designed to give the roll a neat appearance. Prior to wrapping, the roll width and diameter are measured, and on the basis of the measurement result obtained, heads of suitable diameter are picked to be placed on the roll ends.

The end heads can be placed on the roll ends in multiple different ways. Manual placement of the heads is the oldest method, and it is still suited for relatively small-capacity wrapping lines or applications not requiring an improved degree of automation. In such method the operator simply places the inner heads manually to the roll ends and the corresponding outer heads onto heated press platens, which next press the outer heads to adhere to the roll ends. The inner heads are kept against the roll ends by means of separate arms for the duration of the crimping of the wrapper overlaps against the roll ends. The adherence of the outer heads on the platens is in turn implemented with the help of a vacuum. In manual packaging, the wrapping station operator verifies that heads of a correct diameter are picked for the roll ends and that they are correctly placed.

Various kinds of automatic heading machines have long been in use and several different types of such equipment are known. A common feature for almost all automatic heading equipment is that, for each end of the roll, a separate heading machine with a head clamp is provided that serves for moving the head from the head pile to the roll end. In a prior-art heading machine, a rotatable arm is mounted on a vertical guide, said arm having at its end a rotatable vacuum clamp for grasping the heads. Such a heading machine is conventionally used in conjunction with different kinds of head storage shelves situated beside the heading machine. Using this machine, the heads are placed on the roll ends so that the support arm of the clamp is transferred along the vertical guide to the level of the shelf containing the correct size of heads. Next, the support arm of the clamp and the heading machine itself are rotated until the clamp is aligned parallel with the shelf, subsequently the head is picked and transferred from the shelf to the roll end by rotating both the support arm of the clamp and the heading machine and moving the heading machine along the guide. Such heading machines conventionally lack a separate measurement device for the determining the size and position of heads.

In another system the heads are placed in piles on the factory hall floor and therefrom transferred to the roll ends by means of gantry heading manipulators. The gantry transfer carriage is constructed above the head piles and the heading manipulators are generally placed on a single, crosswise movable rail. Thus, a separate pile of heads of a predetermined size must be provided for each heading manipulator. US patent 5,157,265 discloses a method for determining head size and position, said method being suited for use in conjunction with the above-described system. Said measurement method is based on transferring a head picked by a clamp past two pairs of photocells at a known speed, whereby the changes in the photocell signals indicate the instants when the head leading edge meets the photocells and the head trailing edge leaves the photocells. Then, the distances between such intersect points can be computed from the known speed of the head and the temporal difference between the signal changes. As the shape of the head also is known, its position and size can thus be determined. Further, since the picking position of the clamp relative to the head pile is known, the actual position of the head pile can be computed from the head position in the clamp.

Besides the heading methods described above, the heads can be manipulated using a standard industrial multi-axis robot for placing the heads. Such a robot can be integrated with the layout of the wrapping line in a manner permitting the robot to place a head on both ends of the roll. For effective use of the robot, it must be provided with a two-sided clamp which through a flipping movement of the clamp is capable of sequentially picking heads for both roll ends, whereby the need for two separate head-fetching cycles is obviated.

However, the method disclosed in US patent 5,157,265 has several drawbacks which make it unsuitable for use in conjunction with head manipulation by means of a robot. Since the robot must be equipped with a two-sided clamp in which the heads are next to each other, the photocells cannot distinguish which head is the one whose edge causes the signal change, thus making the above-described method incompatible with a two-sided clamp. As the method is based on the use of two photocell detectors only, it fails to detect defects of head edges. When a defective part of the head edge meets the photocell, the head size and position will be erroneously computed and the head will be rejected though in fact it could have been altogether acceptable. Rejection of a head poses no greater problem, but such rejection necessitates the fetching of a new head, which obviously causes a deviation from the normal operation of the wrapping line. Moreover, it must be noted that this system performs a comparison of the measured head position to the clamp reference point, which is continually known on the basis of signals obtained from the position transducers of the head transfer system. Consequently, the system is incompatible with the use of an industrial robot, since the position data of the robot arm is difficult to update in real time during high-speed movements. Therefore, the location of the clamp reference point in a robotic heading system must be performed in an alternative method independent from the position data of the robot arm, because the robot arm movement cannot be slowed down for the measurement so much that the update of arm position data would be possible.

It is an object of the present invention to provide a method and an assembly suited for determining the head size and position relative to the clamp in a system using a multi-axis industrial robot.

The invention is based on transferring the clamp by means of the robot past advantageously three sensors and providing the clamp with a target element suitable aiding in the position detection of the clamp reference point. The head size and position are determined on the basis of geometrical lines computed from the head edge intercept signals obtained by means of the sensors.

More specifically, the method according to the invention is characterized by what is stated in the characterizing part of claim 1.

Furthermore, the assembly according to the invention is characterized by what is stated in the characterizing part of claim 8.

The invention offers significant benefits.

A two-sided clamp is necessary if the head placement is desiredly implemented using a single robot only. This is because the use of a single-sided clamp would result in an excessively long cycle time of heading, thus defeating investment in an expensive industrial robot. The present invention makes it possible to determine the positions of the heads adhered to both sides of the clamp. The head position is determined directly relative to the clamp reference point. thus avoiding continual update of the clamp position data. As three sensor elements are advantageously employed according to the invention, the effect of head edge defects on the measurement results can be eliminated. Besides, three detectors achieve a wider area of measurement, since the use of two detectors only would require the detectors to be located at a close mutual distance to make the head edges intersect the photocell beams even with the smallest-diameter heads. Improved accuracy in the centering of the heads onto the press platens is attained, and particularly, the heads can be directly centered according to the roll diameter. In prior-art systems, heads of a certain diameter could be centered accurately for one roll diameter only, and this centering adjustment was then used for a certain range of roll diameters. Consequently, the head was generally slightly displaced from the center point of the roll end.

In the following the invention is described in greater detail with the help of annexed drawings in which
Figure 1 shows an overall side view of the head-manipulating robot and the press platen unit,
Figure 2 shows a top view of the sensor assembly employed for measurements,
Figures 3 - 6 show the progress of measurement during the movement of the clamp past the sensor assembly, and
Figure 7 shows diagrammatically the measurement principle according to the invention.

When a multi-axis industrial robot is employed for head placement, the heads are fetched from piles located within the reach area of the robot under program control and roll data related to the roll being wrapped. Using a two-sided clamp the robot picks heads matching the roll data and transfers them to the ends of the roll or onto press platens. The present invention is particularly intended for use in conjunction with outer heads, so according to the exemplifying embodiments described below, the heads are transferred onto press platens 7.

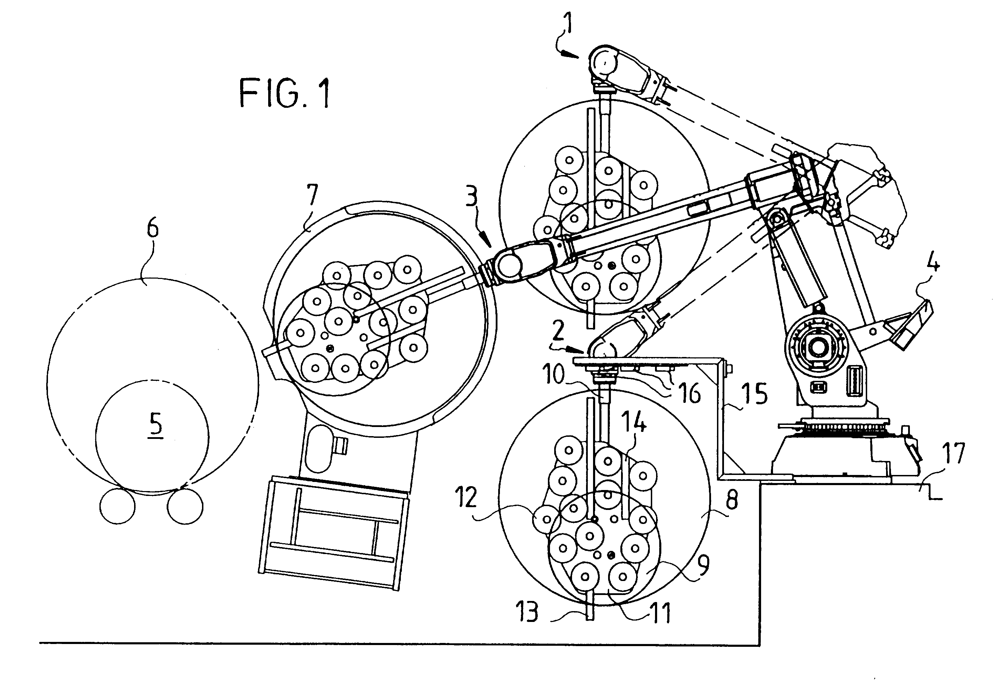

With reference to Fig. 1, the head-manipulating robot 4 is shown in three different positions. Heads 8, 9 adhered to a clamp 11 of the robot 4 are outlined only to elucidate the construction of the clamp 11. In position 1, the robot has picked a head 8, 9 onto both sides of the clamp 11 and is ready to perform a measurement movement. The measurement movement is performed by transferring the clamp 11 past photocell sensors 16 of sensor assembly 15. After the robot 4 has performed the measurement movement, the robot is in position 2, wherefrom it moves further to position 3 and delivers a head onto a press platen 7. The press platens 7 are situated at both ends of the roll 5, 6 being wrapped, and the robot 4 delivers a head onto each platen sequentially. The head is adhered by a vacuum onto the press platen and the platen is heated, whereby a glue layer on the adhesive side of the head melts and permits the head to be glued on the roll end by pressing the press platens 7, which are turned adjacent to the roll ends, against the roll ends.

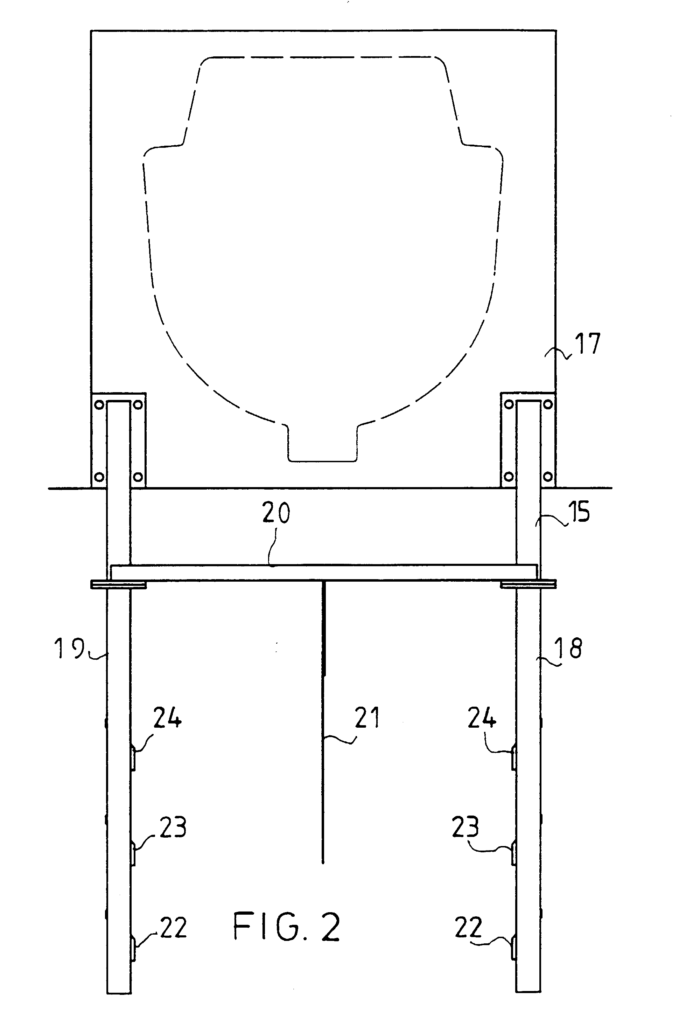

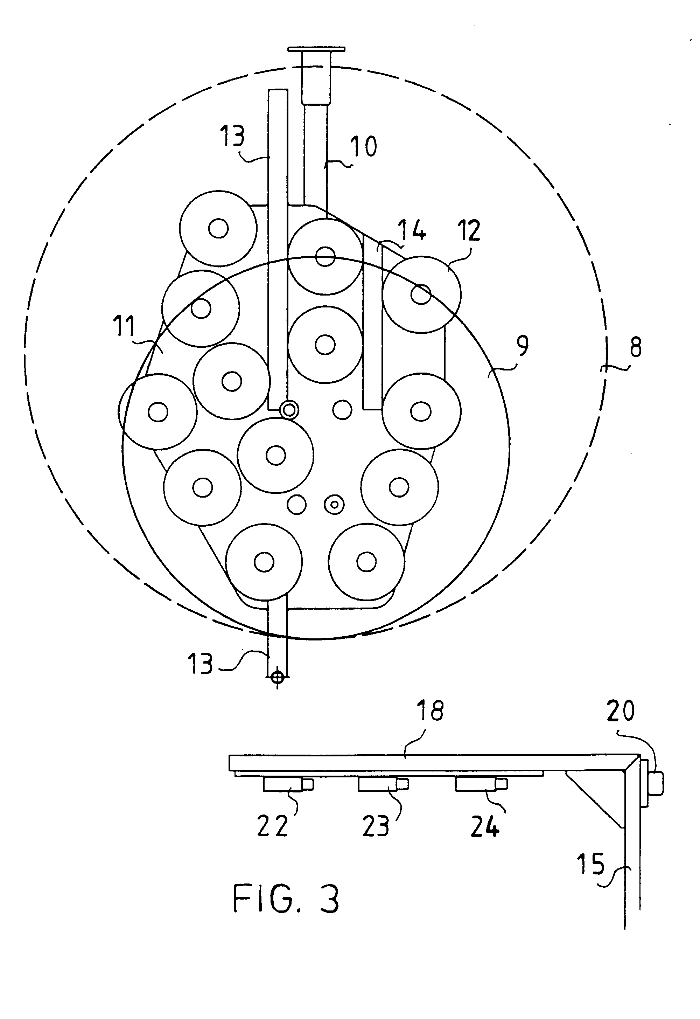

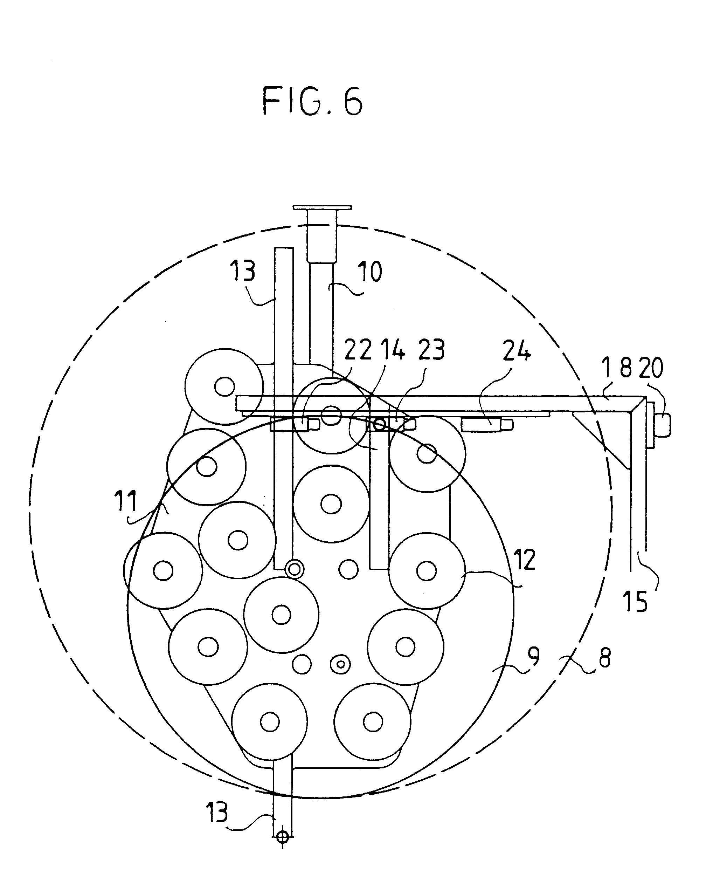

With reference to Figs. 3 - 6, the movement of the clamp 11 from position 1 to position 2 is shown. In the following description the term "head" must be understood to refer to the smaller head 9 indicated by solid lines in the diagrams. The circles drawn in dashed lines refer to the largest-diameter head 8 that can be handled. During the movement the clamp 11 passes between forks 18, 19 of the sensor assembly 15 shown in Fig. 2. The sensor assembly 15 is mounted on a pedestal 17 of the robot and its forks 18, 19 are connected by means of a horizontal bar 20. To the center of the horizontal bar 20 is mounted a fixed reflector 21, aligned parallel with the forks 18, 19. Both of the sensor assembly forks 18, 19 are provided with three photocell sensors 22 - 24 facing inward from the forks 18, 19.

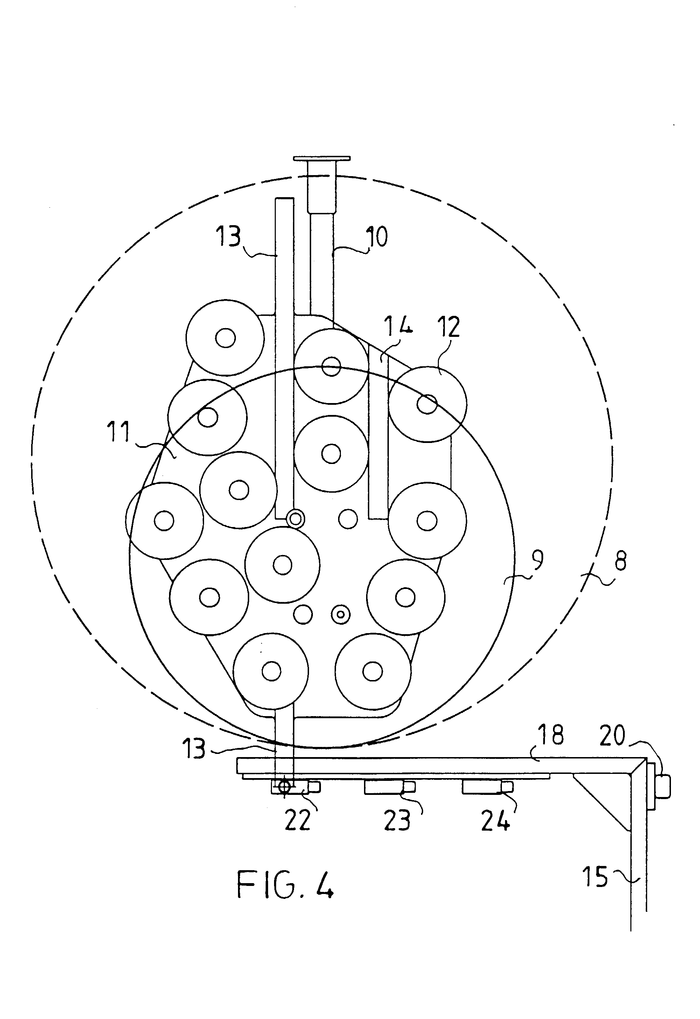

When the clamp 11 travels past the forks 18, 19 of the sensor assembly 15, the fixed reflector 21 goes between the halves of the clamp 11. The clamp 11 is provided with a vertically aligned reflector 13, coincident with the first photocell 22. Correspondingly, the clamp is also provided with another vertically aligned reflector 14 on the side facing the fork 10 of the clamp, coincident with the second photocell. With reference to Fig. 3, the clamp with the adhered heads is shown approaching the measurement area, and with reference to Fig. 4, the start instant of the measurement is shown. At the start instant of the measurement, the leading end of the first vertical reflector 13 intersects the beam of the first photocell 22. The end of the first reflector 22 is overextended so far past the edge of the base plate of the clamp 11 that not even the largest possible head 8 can entirely conceal the reflector 13 though the head should occur to be adhered to in an incorrect position on the clamp 11. The first reflector must always overextend sufficiently far past the head to obtain a start signal for the measurement. Such a start signal is obtained from the instant the first reflector 13 intersects the beam of the first photocell sensor 22 and the start signal is used to initiate the measurement. The photocell sensors 22 - 24 are connected to a control system counter card which, on the basis of the computer clock, computes time intervals elapsed from first signal transition indicating the start of the measurement. The start instant is the same for all photocell sensors 22 - 24, and at the start instant, the beam of the first photocell sensor 22 hits the first vertical reflector 13, while the beams of the second photocell 23 and the third photocell 24 hit the horizontally aligned, fixed reflector 21. As the transfer speed of the clamp 11 moved by robot arm is very precisely constant and the robot is programmed to follow an exactly defined path, the distances between the signal change instants can be easily computed on the basis of the time counted by the counter card and the constant clamp speed employed. As information on the instantaneous speed of the clamp is unknown when the speed is accelerated or decelerated, the clamp 11 must necessarily be moved at a constant speed during the measurement. The clamp speed and the time required for the movement can be verified by tests prior to the actual use of the assembly to find out at which speed the clamp movement best occurs at a constant speed.

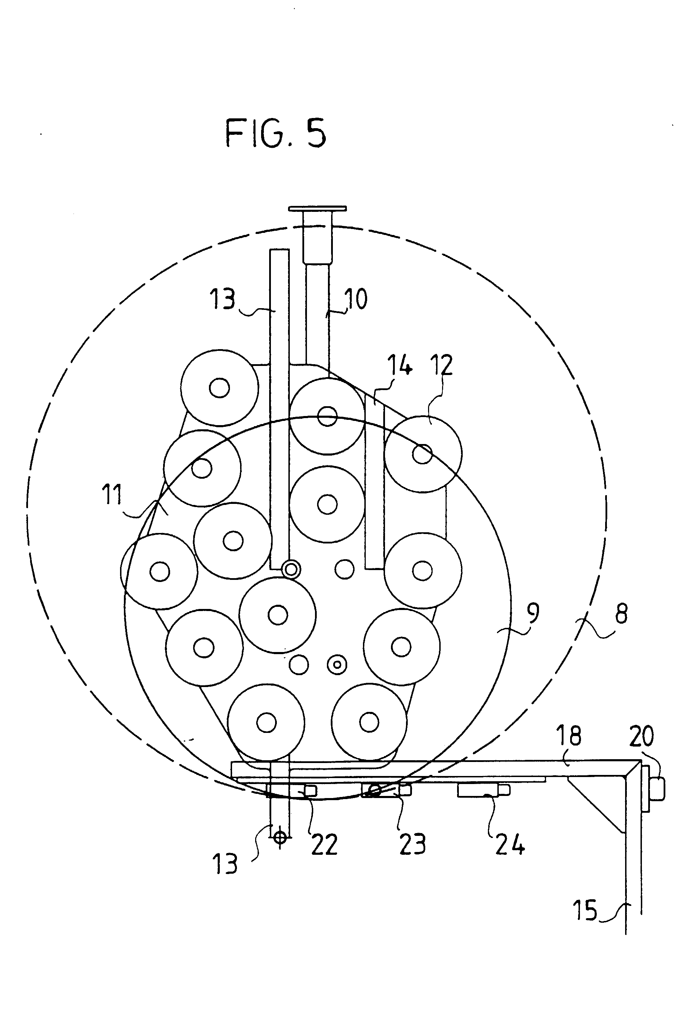

During the next measurement phase, the head 9 adhered to the clamp 11 intersects the beam of one of the photocell sensors. With reference to Fig. 5, the head 9 is shown intersecting the beam of the first photocell sensor 22 and is just about to intersect the beam of the second photocell sensor 23. At the intersect instant the output signal of the photocell undergoes a change, and on the basis of the time elapsed between the start instant signal of the measurement and the signal change instant, the distance between the level of the end of the first reflector 13 and the head edge can be computed. The next change in the output signals of the photocell sensors 22 - 24 takes place when the head 9 has passed the beams of the photocell sensors, whereby a second output signal transition is detected and the second distance can be computed. When the head 9 passes the beam of the first photocell sensor 22, the beam can again hit the first reflector 13, and correspondingly, the beam of the second photocell sensor 23 can hit the second reflector 14, or alternatively, if the head 9 adhered to the clamp is so large as to entirely conceal the second reflector 14, the beam of the second photocell sensor 24 can hit the horizontally aligned, fixed reflector 21. Since the third photocell sensor 24 is so placed as not aim its beam against the clamp 11, its beam can again hit the horizontally aligned reflector 21 when the head 9 has passed the beam.

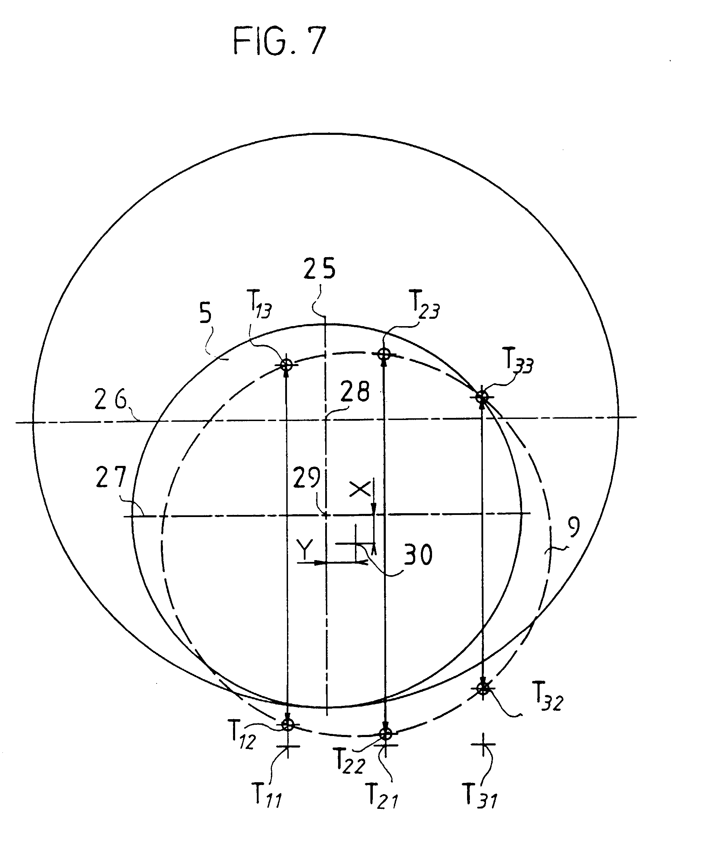

With reference to Fig. 7, the method of computing the size and position of the head adhered to the clamp 11 on the basis of the signals from the photocell sensors 22 - 24 is elucidated. The largest circle in Fig. 7 is called a reference circle 8, whose center point 28 is cocentrical with the reference point of the clamp 11, that is, the point against which the clamp movements are defined and verified. The reference circle can be desiredly selected, and here the reference circle is chosen to be the circle 8 with the diameter corresponding to the largest-diameter head to be picked. The center point 28 of the reference circle is at the intersect point of lines 25 and 26. The smaller circle 5 drawn by the solid line indicates the correct position for a head picked by the clamp 11, said position also corresponding to correct head placement on the end 5 of the roll being wrapped. The actual position of the picked head is shown as circle 9 drawn in dashed line that in this diagram has a diameter identical to that of the smallest head 9 in the preceding diagrams.

For each roll diameter, the correct position of the center point 29 is determined as the intersect point of a vertical line 25 passing via the center point of the reference circle 8 and a horizontal line 27 passing via the center point of the circle 5, which circle indicates the correct position of the head. Thus, this point defines the correct position of the head relative to the reference point 28 of the clamp.

When the first reflector 13 intersects the beam of the first photocell 22, a counting of time intervals is commenced for all photocell sensors 22 - 24. This measurement phase provides measurement start instant signals T₁₁, T₂₁ and T₃₁ for each photocell sensor, respectively. Since the position of the end of the first reflector 13 relative to the clamp reference point 28 is known, the position of the clamp 11 is now determined unambiguously. As the head 9 intersects the beams of the photocell sensors 22 - 24, a first set of intersect instants T₁₂, T₂₂, T₃₂ is obtained. With the help of the elapsed time intervals and known speed of the clamp, the points corresponding to the intersect instants T₁₂, T₂₂, T₃₂ can now be computed relative to the point corresponding to the measurement start instant. When the clamp now moves further, a second set of intersect instants T₁₃, T₂₃, T₃₃ is obtained. The points corresponding to these intersect instants can subsequently be computed. Finally, the diameter and position of the head 9 is determined by computing the coordinates of a circle passing via the points corresponding to instants T₁₂, T₂₂, T₃₂ and T₁₃, T₂₃, T₃₃, whereby the head diameter and position of its center point 30 are obtained. In other words, the circle corresponding to the measured points is determined on the basis of the known distances of the photocell sensors and intersect lines formed by the passing head. If any point fails to match the circle, that is, has erroneous coordinates due to, e.g., a head edge defect, such a point can be omitted, because a reduced number of measurement points are already sufficient to determine the circle.

If the center point of the head 9 picked by the clamp is displaced from the correct clamping center point 29, a required correction of the center point coordinates is computed. The correction is simply obtained as the distances X, Y of the measured center point from a horizontal line 27 passing via the correct center point 29 and from a vertical line 25 passing via the same center point, respectively. As the actual position of the center point of the head 9 is known, the head 9 can be transferred by means of the robot onto the press platen so as to aim the center point 30 of the head to accurately at the center of the roll end. The position alignment of the head on the other side of the clamp occurs simultaneously in a similar manner to that described above.

Besides those described above, the present invention can have alternative embodiments. In the above-described embodiment the sensor instrumentation was implemented using three photocell sensors. In principle, even two sensors are sufficient for determining the head size and position, while such an embodiment compromises the reliability of the measurement. Correspondingly, the head size and position could be directly determined from the first set of three intersect points T₁₂, T₂₂, T₃₂, or alternatively, from the second set of three intersect points T₁₃, T₂₃, T₃₃. Besides photocell sensors, other types of sensors are also feasible and their placement can be varied in a desired manner. However, the mounting of the sensors on a single straight bar is an extremely simple way of implementing the assembly. The direction of clamp movement is insignificant to the spirit of the invention provided that the sensor positions are appropriately selected relative to the clamp movement and said movement is linear within the detection zone of the measurement.

Instead of separate reflectors, the entire clamp can be made reflective or treated with a reflective material so as to give the sensors a signal different from that obtained from the head material. The fixed, horizontal reflector can be implemented in multiple ways and its structure is naturally related to the placement of the sensors. Obviously, sensors operating without reflectors are also feasible.

## Claims

1. A method for determining the size and position of a roll end head, comprising:
- gripping at least one head (9) with a clamp (11) having a first predetermined reference point (28) defined thereon,
- moving the clamp (11) past a plurality of sensors (22 - 24) at a constant velocity by means of the clamp (11),
- detecting corresponding signal change instants (T₁₂, T₂₂, T₃₂ and T₁₃, T₂₃ T₃₃) for each sensor (22 - 24) when the clamp and the head cross the sensors (22 - 24)
- measuring time elapsed between respective start and intersect point for each sensor (22 - 24),
- determinig the position and size of the head (9) on the basis of the constant speed of the head and the signal change instants,
**characterized** in that
- transferring the clamp including a section (13) which extends beyond an edge of the head and defining a second point at a known distance relative to the predetermined reference point (28) past a first sensor (22) and detecting an output signal change indicative of a measurement starting point for each sensor (22 - 24) is detected when the second point crosses the first sensor,
- detecting from each respective sensor (22 - 24) an output signal indicative of a corresponding first intersect point (T₁₁, T₂₁, T₃₁) when the head crosses each sensor, and
- the position and size of the head (9) are computed from points determined by the measurement starting points (T₁₁, T₂₁, T₃₁) of the sensors and the intersect points (T₁₂, T₂₂, T₃₂), and the known mutual distance between the clamp part (13) defining the measurement starting point and the clamp reference point (28).

2. A method as defined in claim 1, **characterized** in that the head (9) is transferred past three sensors (22 - 24).

3. A method as defined in claim 1 or 2, **characterized** by detecting a second output signal change (T₁₃, T₂₃, T₃₃) from each respective sensor (22 - 24) indicative of a corresponding second intersect point when said head passes each sensor (22 - 24) wherein the size and position of the head are determined from detected starting points (T₁₁, T₂₁, T₃₁), first intersect points measured (T_{12,} T₂₂, T₃₂) from a leading edge of the head and second intersect points (T₁₃, T₂₂, T₃₃) measured from the trailing edge of the head.

4. A method as defined in claim 1 or 2, **characterized** in that the size and position of the head (9) are determined on the basis of the detected start points (T₁₁, T₂₁, T₃₁) and the first intersect instants (T_{12,} T₂₂, T₃₂) measured from the leading edge of the head (9).

5. A method as defined in claim 1 or 2, **characterized** in that the size and position of the head (9) are determined on the basis of the detected start points (T₁₁, T₂₁, T₃₁) and the second intersect points (T₁₃, T₂₃, T₃₃) measured from the trailing edge of the head.

6. A method as defined in any foregoing claim, **characterized** by selecting for each head diameter an ideal position (29) on the clamp (11), determining the actual position (30) of a head thereon relative to an ideal position corresponding thereto, and compensating for the difference therebetween when placing the head on a roll (5) being wrapped.

7. A method as defined in any foregoing claim, **characterized** in that the transfer of said heads (9) is implemented by means of a two-sided clamp (11) suited for taking two heads past a pair of facing sensor elements (22 - 24) employed for concurrent measurement of head position and size.

8. An assembly for determining the size and position of a head said assembly comprising:
- a clamp (11) having a first predetermined reference point (28) defined thereon, for gripping and conveying the head (9), at a constant velocity,
- a plurality of sensors (22 - 24) respectively arranged to sense an edge of the head (9) as said head is coveyed by said clamp (11) relative thereto,
- means coupled to said sensors (22 - 24) and responsive to the output signal change of the sensors for computing a position of said head on the clamp (11)
**characterized** in that
- the clamp (11) includes a section (13) which extends beyond an edge of a head (9) to be convoyed and defines a second point at a known distance relative to said predetermined reference point (28), the section (13) being transferrable past a first of the sensors (22) and said first sensor being adapted to provide an output signal change indicative of a measurement starting point when the second point is aligned therewith.

9. An assembly as defined in claim 8, **characterized** in that the number of said sensor elements (22 - 24) is three.

10. An assembly as defined in claim 8, **characterized** in that the clamp (11) has first and secong gripping surfaces for gripping corresponding first and second head concurrently and wherein the plurality of sensor elements (22 - 24) are arranged in inwardly facing groups to permit the clamp to be advanced therebetween.

11. An assembly as defined in any foregoing claim, **characterized** in that said sensor elements (22 - 24) are photocells.

12. An assembly as defined in claim 11, **characterized** by a reflector (13) mounted to the clamp (11) and aligned parallel to the direction of the measurement movement of the clamp, the second point being located at distal end of the reflector and the measurement start instant signal (T₁₁, T₂₁, T₃₁) being inintiated from the end of said reflector.

13. An assembly as defined in claim 11 or 12, **characterized** by a reflector (21) aligned crosswise to the direction of the measurement movement of the clamp so as to reflect the beams of the second (23) and the third photocell sensor (24).

## Patentansprüche

1. Verfahren zum Bestimmen der Größe und Lage eines Rollenendkopfes, es umfaßt:
- das Ergreifen von mindestens einem Kopf (9) mit einer Klammer (11), die einen ersten, vorbestimmten, darauf definierten Referenzpunkt (28) hat;
- das Bewegen des Kopfes (9), vorbei an einer Mehrzahl von Sensoren (22-24), mit einer konstanten Geschwindigkeit mittels der Klammer (11);
- das Feststellen entsprechender Signaländerungsmomente (T₁₂, T₂₂, T₃₂ und T₁₃, T₂₃, T₃₃) für jeden Sensor (22-24), wenn die Klammer und der Kopf die Sensoren (22-24) überqueren;
- das Messen der verstrichenen Zeit zwischen dem jeweiligen Start und dem Schnittpunkt für jeden Sensor (22-24);
- das Ermitteln der Lage und Größe des Kopfes (9) auf der Grundlage der konstanten Geschwindigkeit des Kopfes und der Signaländerungsmomente;
dadurch gekennzeichnet, daß
- das Vorbeiführen der Klammer, die eine Sektion (13) enthält, die sich über einen Rand des Kopfes hinaus erstreckt und einen zweiten Punkt in einem bekannten Abstand relativ zu dem vorbestimmten Referenzpunkt (28) definiert, an einem ersten Sensor (22) vorbei und das Auslösen einer Auslaßsignaländerung detektiert wird, die einen Meßstartpunkt für jeden Sensor (22-24) anzeigt, wenn der zweite Punkt den ersten Sensor überquert;
- von jedem jeweiligen Sensor (22-24) ein Auslaßsignal festgestellt wird, das einen entsprechenden ersten Schnittpunkt (T₁₁, T₂₁, T₃₁) anzeigt, wenn der Kopf jeden Sensor überquert, und daß
- die Lage und Größe des Kopfes (9) berechnet werden aus Punkten, die bestimmt sind durch die Meßstartpunkte (T₁₁, T₂₁, T₃₁) der Sensoren und die Schnittpunkte (T₁₂, T₂₂, T₃₂), und aus dem bekannten gegenseitigen Abstand zwischen dem Klammerteil (13), das den Meßstartpunkt definiert, und dem Klammer-Referenzpunkt (28).

2. Verfahren gemäß Anspruch 1,
dadurch gekennzeichnet, daß der Kopf (9) an drei Sensoren (22-24) vorbeigeführt wird.

3. Verfahren gemäß Anspruch 1 oder 2,
dadurch gekennzeichnet, daß eine zweite Auslaßsignaländerung (T₁₃, T₂₃, T₃₃), die einen entsprechenden zweiten Schnittpunkt anzeigt, von jedem jeweiligen Sensor (22-24) festgestellt wird, wenn dieser Kopf jeden Sensor (22-24) passiert, wodurch die Größe und Lage des Kopfes durch aufgenommene Startpunkte (T₁₁, T₂₁, T₃₁), erste Schnittpunkte (T₁₂, T₂₂, T₃₂), gemessen aus einer Vorderkante des Kopfes, und zweite Schnittpunkte (T₁₃, T₂₃, T₃₃), gemessen aus der Hinterkante des Kopfes, bestimmt werden.

4. Verfahren gemäß Anspruch 1 oder 2,
dadurch gekennzeichnet, daß die Größe und Lage des Kopfes (9) auf der Grundlage der aufgenommenen Startpunkte (T₁₁, T₂₁, T₃₁) und der ersten Schnittpunkte (T₁₂, T₂₂, T₃₂), die aus der Vorderkante des Kopfes (9) gemessen sind, bestimmt werden.

5. Verfahren gemäß Anspruch 1 oder 2,
dadurch gekennzeichnet, daß die Größe und Lage des Kopfes (9) auf der Grundlage der aufgenommenen Startpunkte (T₁₁, T₂₁, T₃₁) und der zweiten Schnittpunkte (T₁₃, T₂₃, T₃₃), die aus der Hinterkante des Kopfes gemessen sind, bestimmt werden.

6. Verfahren gemäß einem der vorangehenden Ansprüche,
dadurch gekennzeichnet, daß für jeden Kopfdurchmesser eine ideale Lage (29) auf der Klammer (11) ausgewählt wird, daß die eigentliche Lage (30) eines Kopfes darauf, relativ zu einer entsprechenden idealen Lage dazu bestimmt wird, und die Differenz zwischen ihnen kompensiert wird, wenn der Kopf auf eine zu verpackende Rolle (5) plaziert wird.

7. Verfahren gemäß einem der vorangehenden Ansprüche,
dadurch gekennzeichnet, daß der Transfer der besagten Köpfe (9) mittels einer Zweiseiten-Klammer (11) durchgeführt wird, die geeignet ist, zwei Köpfe an einem Paar von zugewandten Sensorelementen (22-24) vorbeizuführen, die für eine gleichzeitige Messung von Kopflage und -größe eingesetzt sind.

8. Vorrichtung zum Bestimmen der Größe und Lage eines Kopfes; diese Vorrichtung enthält:
- eine Klammer (11), die einen ersten, vorbestimmten, darauf definierten Referenzpunkt (28) hat, um den Kopf (9) zu greifen und bei einer konstanten Geschwindigkeit zu befördern,
- eine Mehrzahl von Sensoren (22-24), die entsprechend so angeordnet sind, eine Kante des Kopfes (9) zu ertasten, wenn dieser Kopf relativ zu ihnen durch besagte Klammer (11) befördert wird,
- Mittel, die mit diesen Sensoren (22-24) verbunden sind und auf die Auslaßsignaländerung der Sensoren reagieren, um eine Lage des besagten Kopfes auf der Klammer (11) zu berechnen,
dadurch gekennzeichnet, daß
- die Klammer (11) eine Sektion (13) enthält, die sich über einen Rand eines zu befördernden Kopfes (9) hinaus erstreckt, und einen zweiten Punkt in einem bekannten Abstand relativ zu dem besagten vorbestimmten Referenzpunkt (28) definiert, und daß die Sektion (13) vorbeigeführt werden kann an einem ersten der Sensoren (22) und dieser erste Sensor angepaßt ist, eine Auslaßsignaländerung zu liefern, die einen Meßstartpunkt anzeigt, wenn der zweite Punkt mit ihm zur Deckung kommt.

9. Vorrichtung gemäß Anspruch 8,
dadurch gekennzeichnet, daß die Anzahl der besagten Sensorelemente (22-24) drei ist.

10. Vorrichtung gemäß Anspruch 8,
dadurch gekennzeichnet, daß die Klammer (11) erste und zweite Greifoberflächen hat, um einen entsprechenden ersten und zweiten Kopf gleichzeitig zu greifen, und daß die Mehrzahl der Sensorelemente (22-24) in einwärts weisenden Gruppen angeordnet sind, um der Klammer eine Fortbewegung dazwischen zu gestatten.

11. Vorrichtung gemäß einem der vorangehenden Ansprüche,
dadurch gekennzeichnet, daß die besagten Sensorelemente (22-24) Photozellen sind.

12. Vorrichtung gemäß Anspruch 11,
gekennzeichnet, durch einen Reflektor (13),der auf der Klammer (11) in einer Linie parallel zu der Richtung der Meßbewegung der Klammer montiert ist, wobei sich der zweite Punkt am entfernten Ende des Reflektors befindet und das Meßstartpunktsignal (T₁₁, T21, T31) durch das Ende dieses Reflektors ausgelöst wird.

13. Vorrichtung gemäß Anspruch 11 oder 12,
dadurch gekennzeichnet, daß ein Reflektor (21) quer zur Richtung der Meßbewegung der Klammer ausgebildet ist, um die Strahlen des zweiten (23) und des dritten Photozellensensors (24) zu reflektieren.

## Revendications

1. Procédé pour la détermination de la dimension et de la position d'une tête d'extrémité de cylindre, comprenant :
la prise d'au moins une tête (9) avec une pince (11) sur laquelle est défini un premier point de référence prédéterminé (28),
le déplacement de la pince (11) devant une pluralité de capteurs (22-24) à une vitesse constante au moyen de la pince (11),
la détection d'instants correspondants de changement de signal (T₁₂,T₂₂,T₃₂ et T₁₃,T₂₃,T₃₃) pour chaque capteur (22-24) lorsque la pince et la tête croisent les capteurs (22-24),
la mesure du temps écoulé entre les points respectifs de départ et d'intersection pour chaque capteur (22-24),
la détermination de la position et de la dimension de la tête (9) sur la base de la vitesse constante de la tête et des instants de changement de signal,
caractérisé en ce que :
on transfère la pince, comportant une partie (13) qui s'étend au-delà d'un bord de latête et définissant un deuxième point à une distance connue par rapport au point de référence prédéterminé (28), devant un premier capteur (22) et on détecte un changement de signal de sortie indicatif d'un point de départ de mesure pour chaque capteur (22-24), qui est détecté lorsque le deuxième point croise le premier capteur,
on détecte, à partir de chaque capteur respectif (22-24), un signal de sortie indicatif d'un premier point d'intersection correspondant (T₁₁,T₂₁,T₃₁) lorsque la tête croise chaque capteur, et
on calcule la position et la dimension de la tête (9) à partir des points déterminés par les points de départ de mesure (T₁₁,T₂₁,T₃₁) des capteurs et les points d'intersection (T₁₂,T₂₂,T₃₂), et de la distance mutuelle connue entre la partie de pince (13) définissant le point de départ de mesure et le point de référence (28) de la pince.

2. Procédé selon la revendication 1, caractérisé en ce que la tête (9) est transférée devant trois capteurs (22-24).

3. Procédé selon la revendication 1 ou 2, caractérisé en ce qu'on détecte un deuxième changement de signal de sortie (T₁₃,T₂₃,T₃₃) à partir de chaque capteur respectif (22-24), indicatif d'un deuxième point d'intersection correspondant lorsque ladite tête franchit chaque capteur (22-24), la dimension et la position de la tête étant déterminées à partir des points de départ détectés (T₁₁,T₂₁,T₃₁), des premiers points d'intersection (T₁₂,T₂₂,T₃₂) mesurés à partir d'un bord avant de la tête, et des deuxièmes points d'intersection (T₁₃, T₂₃,T₃₃) mesurés à partir du bord arrière de la tête.

4. Procédé selon la revendication 1 ou 2, caractérisé en ce qu'on détermine la dimension et la position de la tête (9) sur la base des points de départ détectés (T₁₁,T₂₁,T₃₁) et des premiers instants d'intersection (T₁₂,T₂₂,T₃₂) mesurés à partir du bord avant de la tête (9).

5. Procédé selon la revendication 1 ou 2, caractérisé en ce qu'on détermine la dimension et la position de la tête (9) sur la base des points de départ détectés (T₁₁,T₂₁,T₃₁) et des deuxièmes points d'intersection (T₁₃,T₂₃T₃₃) mesurés à partir du bord arrière de la tête.

6. Procédé selon une quelconque des revendications précédentes, caractérisé en ce qu'on choisit pour chaque diamètre de tête une position idéale (29) sur la pince (11), on détermine la position effective (30) d'une tête sur la pince par rapport à une position idéale correspondant à cette tête, et on compense la différence entre ces positions lorsqu'on place la tête sur un rouleau (5) à entourer.

7. Procédé selon une quelconque des revendications précédentes, caractérisé en ce que le transfert desdites têtes (9) est effectué au moyen d'une pince double (11) permettant d'amener deux têtes devant une paire d'éléments de détection en regard (22-24) employés pour la mesure simultanée de la position et de la dimension des têtes.

8. Dispositif pour la détermination de la dimension et de la position d'une tête, ledit dispositif comprenant :
une pince (11), sur laquelle est défini un premier point de référence prédéterminé (28), pour saisir et déplacer la tête (9) à une vitesse constante,
une pluralité de capteurs (22-24) respectivement agencés pour détecter un bord de la tête (9) pendant que ladite tête est transportée par ladite pince (11) par rapport aux capteurs,
des moyens couplés auxdits capteurs (22-24) et qui répondent au changement du signal de sortie des capteurs pour calculer une position de ladite tête sur la pince (11),
caractérisé en ce que :
la pince (11) comprend une partie (13) qui s'étend au-delà d'un bord de la tête (9) à transporter et qui définit un deuxième point à une distance connue dudit point de référence prédéterminé (28), la partie (13) étant transférable devant un premier des capteurs (22) et ledit premier capteur pouvant produire un changement de signal de sortie indicatif d'un point de départ de mesure lorsque le deuxième point est aligné avec le premier capteur.

9. Dispositif selon la revendication 8,
caractérisé en ce que le nombre desdits éléments de détection (22-24) est de trois.

10. Dispositif selon la revendication 8,
caractérisé en ce que la pince (11) présente une première et une deuxième surfaces de prise pour saisir simultanément une première et une deuxième têtes correspondantes, et dans lequel la pluralité d'éléments de détection (22-24) sont agencés en groupes tournés vers l'intérieur pour permettre de faire avancer la pince entre eux.

11. Dispositif selon une quelconque des revendications précédentes, caractérisé en ce que lesdits éléments de détection (22-24) sont des photocellules.

12. Dispositif selon la revendication 11, caractérisé en ce qu'il comprend un réflecteur (13) monté sur la pince (11) et aligné parallèlement à la direction du mouvement de mesure de la pince, le deuxième point étant situé à une extrémité distale du réflecteur et le signal d'instant de départ de mesure (T₁₁, T₂₁,T₃₁) étant déclenché à partir de l'extrémité du dit réflecteur.

13. Dispositif selon la revendication 11 ou 12, caractérisé en ce qu'il comprend un réflecteur (21) aligné transversalement à la direction du mouvement de mesure de la pince de façon à réfléchir les faisceaux des deuxième (23) et troisième (24) capteurs à photocellule.
